# EUROPÄISCHE PATENTSCHRIFT

(11) **EP 1 611 367 B1**
(45) Veröffentlichungstag und Bekanntmachung des Hinweises auf die Patenterteilung: **08.10.2008**
(21) Anmeldenummer: 04724246.6
(22) Anmeldetag: 30.03.2004
(51) Int. Cl.: F16F 13/14

(54) **HYDRAULISCH DÄMPFENDES GUMMIBUCHSENLAGER FÜR VERTIKALE MONTAGE**
HYDRAULICALLY DAMPING RUBBER BUSH BEARING FOR VERTICAL MOUNTING
PALIER A DOUILLE EN CAOUTCHOUC A AMORTISSEMENT HYDRAULIQUE POUR UN MONTAGE VERTICAL

(30) Priorität: 04.04.2003 DE 10315645
(43) Veröffentlichungstag der Anmeldung: 04.01.2006
(73) Patentinhaber: ZF Boge Elastmetall GmbH, 49448 Lemförde (DE)
(72) Erfinder: VOSSEL, Andreas, 49086 Osnabrück (DE); KRAMER, Klaus, 49434 Neuenkirchen (DE)
(86) Internationale Anmeldenummer: PCT/DE2004/000671
(87) Internationale Veröffentlichungsnummer: WO 2004/092612

(56) Entgegenhaltungen:
- EP-A- 0 410 455
- DE-A- 10 057 191
- DE-A- 19 729 290

## Beschreibung

Die Erfindung betrifft ein hydraulisch dämpfendes Gummibuchsenlager, vorzugsweise zur Lagerung der Lenker einer Kraftfahrzeugachse, welches für eine vertikale Montage und zur Aufnahme kardanischer Beanspruchungen in dieser Einbaulage ausgebildet ist.

Nach dem Stand der Technik werden hydraulisch dämpfende Gummilager, so genannte Hydrobuchsen, im Zusammenhang mit der Lagerung von Teilen der Radaufhängung eines Kraftfahrzeugs im Allgemeinen horizontal, das heißt im Bezug auf ihre Lagerachse liegend eingebaut. Dabei weist die derzeit gebräuchliche horizontale Montage der Hydrobuchsen den Nachteil auf, dass die Montage im Fahrzeug relativ teuer ist. Dies hängt damit zusammen, dass eine automatische Zuführung der zur Befestigung der Buchse dienenden Schraube im Grunde nicht möglich ist und daher eine vollautomatische Montage weitestgehend ausscheidet. Die Lager werden daher zumeist von Hand montiert, was zu einer Erhöhung der Fertigungskosten führt.

Im Falle des für die automatische Montage günstigeren vertikalen Einbaus weisen die meisten der bisher verwendeten Hydrobuchsen Probleme bei der Lebensdauer auf. Vor allem kardanischen Beanspruchungen führen dabei zu einem erhöhten Verschleiß und in der Folge zu einer verringerten Lebensdauer der Lager. Bisherige Konstruktionen zeigen insbesondere große Probleme in der Übertragung von Kardanwinkeln von bis zu ± 20°.

Durch die DE 100 57 191 A1 wird ein hydraulisch dämpfendes Gummilager beschrieben, dessen kardanische Belastbarkeit auch bei einem vertikalen Einbau durch spezielle konstruktive Maßnahmen erhöht wurde. Dazu weist das metallische Innenteil in seinem axial mittleren Bereich ausgewölbte, annähernd kugelförmig ausgebildete Außenflächen auf. Die mit ihm durch Vulkanisation verbundene Gummifeder und ebenso eine im Lager angeordnete Zwischenhülse sind an diesen Konturverlauf des Innenteils angepasst. Hierdurch ist eine vergleichsweise aufwendige Lagergeometrie gegeben, welche zur erhöhten Kosten für die Fertigung des Lagers führt.

Aufgabe der vorliegenden Erfindung ist es daher ein auch in vertikaler Einbaulage zur Aufnahme kardanischer Beanspruchungen geeignetes Lager so auszubilden, dass dieses eine einfache Geometrie und Konstruktion aufweist. Hierdurch sollen sich trotz des Vorteils einer möglichen vollautomatischen Montage des Lagers bei dessen zweckentsprechenden Einsatz geringe Kosten für dessen Fertigung ergeben.

Die Erfindung wird durch ein hydraulisch dämpfendes Gummibuchsenlager mit den Merkmalen des Hauptanspruchs gelöst. Vorteilhafte Aus- bzw. Weiterbildungen der Erfindung sind durch die Unteransprüche gegeben.

Das erfindungsgemäß vorgeschlagene hydraulisch dämpfende Gummibuchsenlager, welches für eine vertikale Montage ausgebildet ist, besteht zunächst in an sich bekannter Weise aus einem im Wesentlichen zylinderförmigen metallischen Innenteil, einer konzentrisch dazu angeordneten metallischen Hülse (Innenkäfig) und einem zwischen dem Innenteil und dem Innenkäfig angeordneten und mit ihnen durch Vulkanisation verbundenen elastomeren Lagerkörper. In dem elastomeren Lagerkörper sind, auf dessen Umfang verteilt, mindestens zwei durch einen Kanal miteinander verbundene Kammern zur Aufnahme eines fluiden Dämpfungsmittels ausgebildet. In erfindungswesentlicher Weise geht die radial innen gelegene Wand einer jeden Kammer (innere Kammerwand) von einem der Lagerachse im Wesentlichen parallel folgenden Abschnitt in einem Bereich zumindest eines der axialen Enden der Kammer in einen Abschnitt mit einem gegen die Lagerachse geneigten Verlauf über. Hierdurch ist eine in Richtung der Lagerachse verlaufende Hinterschneidung ausgebildet. Gleichzeitig sind der Innenkäfig und der elastomere Lagerkörper korrespondierend mit jedem mit einer solchen Hinterschneidung versehenen axialen Ende einer Kammer, in einem im Wesentlichen der Erstreckung der jeweiligen Kammer entsprechenden Umfangsabschnitt, gegenüber ihren übrigen Umfangsabschnitten axial verkürzt. Diese, vor allem durch Merkmalskombination aus hinterschnittener Kammerinnenwand und in diesem Bereich entsprechend axial verkürztem Innenkäfig sowie axial verkürztem Lagerkörper charakterisierte Lagerkonstruktion, ermöglicht es dem Lager in besonders vorteilhafter Weise kardanische Einwirkungen durch entsprechendes Einfedern über die mit dem Dämpfungsmittel gefüllten Kammern aufzunehmen. Dabei verursachen kardanische Kräfte bis zu einem Kardanikwinkel von ±20° am Lager einen deutlich geringeren Verschleiß als etwa bei vertikal eingebauten Buchsenlagern herkömmlicher Konstruktion. Als besonders vorteilhaft ist zudem hervorzuheben, dass insbesondere das Innenteil bzw. Innenrohr des Lagers hinsichtlich seiner üblicherweise zylindrischen Form unverändert bleiben kann, was zu einer einfacheren Konstruktion führt, als bei dem bei der Schilderung des Standes der Technik beschriebenen, für den vertikalen Einbau ausgelegten Lager. Die Herstellung der Hinterschneidung beim Vergießen des Lagers mit dem Elastomer sowie die axiale Verkürzung des elastomeren Lagerkörpers in diesem Bereich sind dabei aus fertigungstechnischer Sicht ohnehin unkritisch, aber auch die Herstellung des an den axialen Stirnenden entsprechend geformten Innenkäfigs führt zu einem nur unwesentlich erhöhten Aufwand.

Das Gummibuchsenlager kann in der dargestellten erfindungsgemäßen Ausbildung entweder direkt an entsprechender Stelle, beispielsweise im Bereich der Radaufhängung eines Kraftfahrzeugs, montiert werden oder für die Montage noch von einer vorzugsweise metallischen Außenhülse aufgenommen sein. Im letztgenannten Fall ist die Außenhülse analog zum Lagerkörper und zum Innenkäfig ebenfalls im Bereich von Hinterschneidungen der Kammerinnenwände axial verkürzt.

Je nach dem vorgesehenen Einsatz des Lagers sind, unter Beibehaltung des grundsätzlichen Erfindungsgedankens, unterschiedliche Ausgestaltungsvarianten des vorgeschlagenen Lagers möglich. Entsprechend einer möglichen Ausbildungsform verfügt das Lager über zwei Dämpfungsmittelkammern, die eine Hinterschneidung im Bereich jeweils eines ihrer axialen Enden aufweisen. Um die Aufnahme kardanisch wirkender Kräfte zu ermöglichen sind dabei die Hinterschneidungen der beiden Kammern, bezogen auf die axiale Erstreckung des Lagers, zueinander diametral angeordnet.

Bei einer besonders praxisrelevanten Ausführungsform des erfindungsgemäßen Gummibuchsenlagers sind in dessen elastomeren Lagerkörper zwei Kammern ausgebildet, die jeweils axial beidseitig eine Hinterschneidung aufweisen. Bevorzugt - dies ist jedoch auch wiederum abhängig von den beim Einsatz des Lagers zu erwartenden Belastungszuständen - sind dabei die beiden Kammern, bezogen auf den Umfang des Lagers, in einem Winkel von 180° zueinander angeordnet sind.

Grundsätzlich ist die Hinterschneidung der inneren Kammerwände bereits durch eine entsprechende Gestaltung ihres Verlaufs zu erhalten. Auch eine Verbesserung der kardanische Eigenschaften ist hierdurch bereits gegeben. Bevorzugt weisen aber auch die radial außen gelegenen Wände der Kammern (äußere Kammerwände) jeweils im Bereich der durch den entsprechenden Verlauf der zugehörigen inneren Kammerwand ausgebildeten Hinterschneidung ebenfalls einen gegen die Lagerachse geneigten Verlauf auf. Im Bereich eines parallel zur Lagerachse und durch die Mitte der Umfangserstreckung einer Kammer geführten Schnitts, folgt dabei der Verlauf der äußeren Kammerwände im Wesentlichen dem der inneren. Gegebenenfalls weisen die inneren und äußeren Kammerwände in dem Bereich mit grundsätzlich gleichem Verlauf zueinander einen gleichbleibenden Abstand auf.

Entsprechend einer vorteilhaften Weiterbildung vergrößert sich der Abstand zwischen den inneren und äußeren Kammerwänden jedoch in den, bezogen auf die Umfangserstreckung der Kammern äußeren Bereichen. Die Kammern erweitern sich also zu diesen äußeren Bereichen hin und bilden im Winkel von 90° zur Dämpfungsrichtung eine Öffnung aus. Im Bereich der Mitte der Umfangserstreckung der Kammern werden dabei gleichzeitig durch den verringerten Abstand zwischen den inneren und äußeren Kammerwänden Gummianschläge ausgebildet. Es ist aber ebenso möglich, die Anschläge aus Kunststoff auszubilden.

Sofern dies aufgrund des vorgesehenen Einsatzzweckes und der damit verbundenen Anforderungen erforderlich ist, können, entsprechend möglicher Weiterbildungen des erfindungsgemäßen Lagers, zur Verkürzung des Radialweges seines Lagerkörpers zwischen diesem und dem Innenteil und/oder dem Innenkäfig spezielle Einlegeteile angeordnet werden. Solche vorzugsweise aus Metall oder Kunststoff bestehenden Einlegeteile werden bei der Montage des Lagers eingebracht.

Gemäß einer weiteren möglichen Ausbildungsform des erfindungsgemäßen Lagers weist dessen metallisches Innenrohr in den an eine innere Kammerwand angrenzenden Bereichen eine sich über seine gesamte axiale Länge erstreckende Abflachung auf.

Die Erfindung soll nachfolgend anhand eines Ausführungsbeispiels nochmals näher erläutert werden. In den zugehörigen Zeichnungen zeigen:
- Figur 1:: Eine räumliche Darstellung des erfindungsgemäßen Lagers
- Figur 2:: Eine Schnittdarstellung des Lagers nach Figur 1 mit einem Schnitt entlang der Linie A-A
- Figur 3:: Das Lager nach Figur 1 bzw. Figur 2 in einer Schnittdarstellung mit einem Schnitt entlang der Linie B-B
- Figur 4:: Das Lager gemäß der vorhergehenden Figuren in einer Schnittdarstellung mit einem Schnitt entlang der Linie C-C
- Figur 5:: Das Lager gemäß Figur 1 mit einer Außenhülse

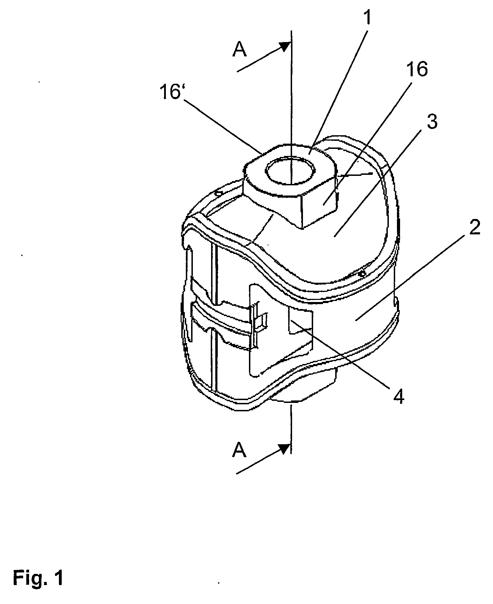

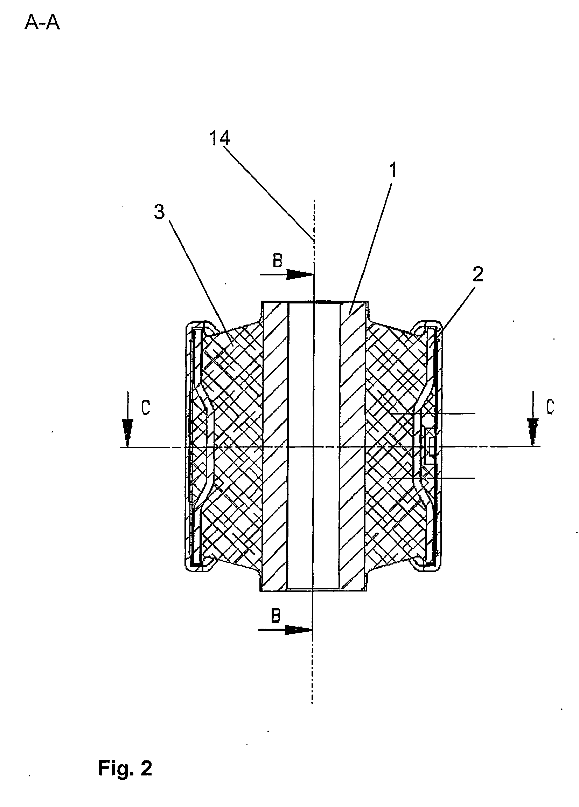

Die Figur 1 betrifft die räumliche Darstellung eines Ausführungsbeispiels des erfindungsgemäßen Lagers. Eine nähere Erläuterung der Einzelteile des Lagers soll jedoch anhand der Schnittdarstellungen der Figuren 2 bis 4 erfolgen.

In der Figur 2 ist das Lager nach Figur 1 in einer Schnittdarstellung mit einem entlang der Linie A-A geführten Schnitt dargestellt. In der Darstellung sind die wesentlichen Lagerteile, die als solches bereits aus dem Stand der Technik bekannt sind, zu erkennen. Danach besteht das Lager aus einem metallischen im wesentlichen zylinderförmigen Innenteil bzw. Innenrohr 1, einer konzentrisch dazu angeordneten Hülse 2 (Innenkäfig) und dem zwischen diesen Teilen eingeordneten und mit ihnen durch Vulkanisation verbundenen elastomeren Lagerkörper 3. Die in dem elastomeren Lagerkörper 3 ausgebildeten Kammern 4,4' für die Aufnahme des fluiden Dämpfungsmittels sind in dieser Darstellung aufgrund der Schnittebene nicht zu erkennen. Es ist aber ersichtlich, dass die in dieser Darstellung erkennbaren Abschnitte des Innenkäfigs 2 annähernd die gleiche axiale Länge aufweisen, wie das Innenteil bzw. Innenrohr 1.

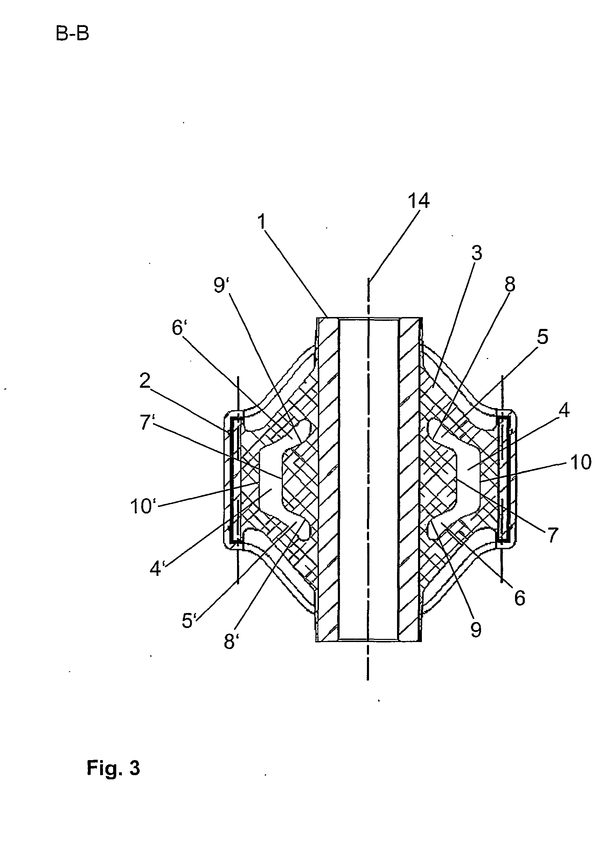

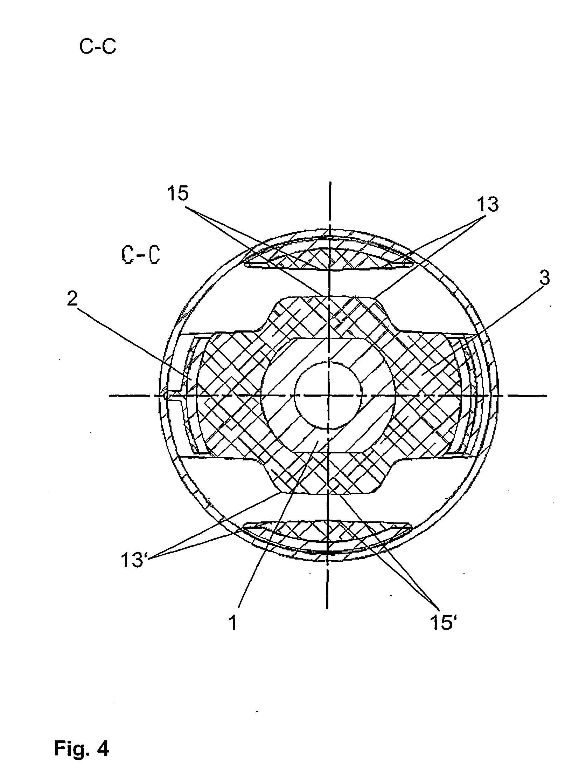

Wie die Figur 3 zeigt, sind jedoch ganz andere Verhältnisse im Hinblick auf einen entlang der Linie B-B geführten Schnitt gegeben. Die hier erkennbaren Abschnitte des Innenkäfigs 2 und des Lagerkörpers 1 sind hinsichtlich ihrer axialen Erstreckung gegenüber dem Innenrohr 1 deutlich verkürzt. In der Darstellung sind außerdem die Kammern 4,4' zur Aufnahme des Dämpfungsmittels zu erkennen. Die Kammern 4,4' weisen, hier klar erkennbar, zur Lösung der erfindungsgemäßen Aufgabe eine spezielle Geometrie auf. Dabei ist im Bereich ihrer axialen Enden jeweils eine in Richtung der Lagerachse 14 verlaufende Hinterschneidung 5, 5', 6, 6' ausgebildet. Die inneren und die äußeren Kammerwände gehen dabei an den axialen Kammerenden von einem im wesentlichen parallel der Lagerachse folgenden Verlauf bzw. Abschnitt 7 in einen Abschnitt 8, 8', 9,9' mit einem gegen die Lagerachse 14 geneigten Verlauf über. Es ist zu erkennen, dass bei den dargestellten Ausführungsbeispiel die jeweils äußere Kammerwand 10, 10' in ihrem Verlauf im Wesentlichen der inneren Kammerwand folgt. Durch die Ausbildung der Hinterschneidungen 5, 5', 6, 6' wird die verbesserte Stabilität des Lagers gegenüber kardanischen Beanspruchungen bei einer senkrechten Verbauung erreicht. Die axial mittleren Bereiche der Kammern 4, 4' bilden in vorteilhafter Weise Anschlagsflächen 15, 15' (siehe Figur 4) aus. Das Lager kann bei dieser Ausbildung problemlos kardanische Beanspruchungen mit einem Kardanikwinkel von ±20° aufnehmen.

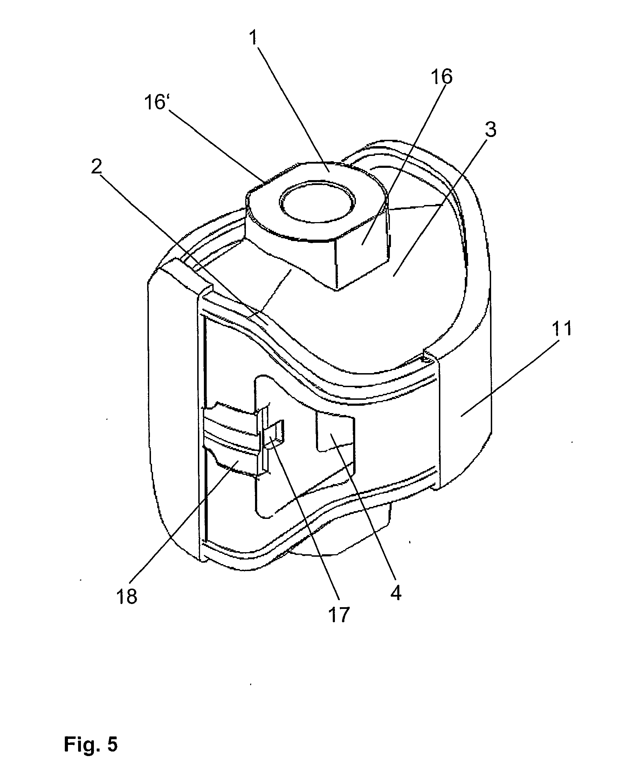

Wie aus der Figur 4 im Zusammenhang mit der Figur 1 deutlich wird, sind durch den Konturverlauf der inneren Kammerwände und der äußeren Kammerwände 10, 10' mit einer Erweiterung der Kammern 4,4' in den äußeren Bereichen ihrer Umfangserstreckung Kammeröffnungen (13, 13') ausgebildet, die quer zu der bei einer vertikalen Einbaulage gegebenen Beanspruchungsrichtung des Lagers angeordnet sind. Zur Komplettierung des Lagers wird bei dessen Fertigung, in die in der in Figur 1 erkennbaren Ausnehmungen 17 ein nur in der Figur 5 dargestelltes Kanalträgerelement 18 eingeclipst, so dass die Kammern 4, 4' durch den darin ausgebildeten Kanal 12 strömungsleitend verbunden werden und das Dämpfungsmittel bei einer Beanspruchung des Lagers zwischen den Kammern 4,4' hin und her fließen kann. Ein entsprechender Kanal 12 kann aber auch bereits in den elastomeren Lagerkörper 3 einvulkanisiert sein. In diesem Falle ist ein gesonderter Kanalträger entbehrlich. Das erfindungsgemäße Lager kann in der durch Figuren 1 bis 4 wiedergegebenen beispielhaften Ausbildungsform entweder direkt an entsprechender, durch seinen Einsatzzweck bestimmter Stelle montiert werden oder noch von einer zusätzlichen Außenhülse 11, vorzugsweise aus Metall, umgeben sein. Letzteres ist nochmals in der Figur 5, wiederum in einer räumlichen Darstellung veranschaulicht, wobei das Lager mit einem Ausbruch in der Außenhülse 11 dargestellt ist. Das Lagerinnenteil 1 weist, wie in den Figuren 1 und 5 erkennbar, jeweils im Bereich der Kammern 4, 4' eine Abflachung 16, 16' auf.

### Bezugszeichenliste

- 1: Innenteil
- 2: Hülse, Innenkäfig
- 3: elastomerer Lagerkörper
- 4, 4': Kammern
- 5, 5': Hinterschneidung
- 6, 6': Hinterschneidung
- 7, 7': Abschnitt
- 8, 8': Abschnitt
- 9, 9': Abschnitt
- 10, 10': äußere Kammerwand
- 11: Außenhülse
- 12: Kanal
- 13, 13': (Kammer-) Öffnung
- 14: Lagerachse
- 15, 15': Anschlag bzw. Anschlagfläche
- 16: Abflachung
- 17: Ausnehmung
- 18: Kanalträgerelement

## Patentansprüche

1. Hydraulisch dämpfendes Gummibuchsenlager, welches für eine vertikale Montage ausgebildet ist, bestehend aus einem im Wesentlichen zylinderförmigen metallischen Innenteil (1), einer konzentrisch dazu angeordneten metallischen Hülse (Innenkäfig) (2), einem zwischen dem Innenteil (1) und dem Innenkäfig (2) angeordneten und mit ihnen durch Vulkanisation verbundenen elastomeren Lagerkörper (3), in welchem auf dem Umfang verteilt mindestens zwei durch einen Kanal (12) miteinander verbundene Kammern (4, 4') zur Aufnahme eines fluiden Dämpfungsmittels ausgebildet sind, **dadurch gekennzeichnet, dass** die radial innen gelegene Wand jeder Kammer (4, 4') (innere Kammerwand) von einem der Lagerachse im Wesentlichen parallel folgenden Abschnitt (7, 7') in einem Bereich zumindest eines der axialen Enden der Kammer (4, 4'), unter Ausbildung einer Hinterschneidung (5, 5', 6, 6') in Richtung der Lagerachse (14), in einen Abschnitt (8, 8', 9, 9') mit einem gegen die Lagerachse (14) geneigten Verlauf übergeht und dass der Innenkäfig (2) sowie der elastomere Lagerkörper (3) korrespondierend mit jedem mit einer solchen Hinterschneidung (5, 5', 6, 6') versehenen axialen Ende einer Kammer (4, 4') und in einem im Wesentlichen der Erstreckung der jeweiligen Kammer (4, 4') entsprechenden Umfangsabschnitt gegenüber ihren übrigen Umfangsabschnitten axial verkürzt sind.

2. Hydraulisch dämpfendes Gummibuchsenlager nach Anspruch 1, welches von einer Außenhülse (11) umgeben ist, **dadurch gekennzeichnet, dass** die Außenhülse (11) einen an den elastomeren Lagerkörper (3) und den Innenkäfig (2) angepassten Umfangsverlauf mit axial verkürzten Abschnitten im Bereich der Hinterschneidungen (5, 5', 6, 6') der Kammern (4, 4') aufweist.

3. Hydraulisch dämpfendes Gummibuchsenlager nach Anspruch 1 oder 2, **dadurch gekennzeichnet, dass** dieses zwei Kammern (4, 4') mit einer Hinterschneidung (5, 5') im Bereich jeweils eines ihrer axialen Enden aufweist, wobei die Hinterschneidungen (5, 5') der beiden Kammern (4, 4') bezogen auf die axiale Erstreckung des Lagers zueinander diametral angeordnet sind.

4. Hydraulisch dämpfendes Gummibuchsenlager nach Anspruch 1 oder 2, **dadurch gekennzeichnet, dass** dieses zwei Kammern (4, 4') mit je einer Hinterschneidung (5, 5', 6, 6') im Bereich beider axialen Kammerenden aufweist.

5. Hydraulisch dämpfendes Gummibuchsenlager nach Anspruch 3 oder 4, **dadurch gekennzeichnet, dass** die beiden Kammern (4, 4') bezogen auf den Umfang des Lagers in einem Winkel von 180° zueinander angeordnet sind.

6. Hydraulisch dämpfendes Gummibuchsenlager nach Anspruch 1 oder 4, **dadurch gekennzeichnet, dass** die radial außen gelegenen Wände (10, 10') der Kammern (äußere Kammerwände) jeweils im Bereich einer durch den entsprechenden Verlauf der zugehörigen inneren Kammerwand ausgebildeten Hinterschneidung (5, 5', 6, 6') ebenfalls einen gegen die Lagerachse (14) geneigten Verlauf aufweisen und im Bereich eines parallel zur Lagerachse (14) und durch die Mitte der Umfangserstreckung einer Kammer (4, 4') geführten Schnitts, in ihrem Verlauf im Wesentlichen dem Verlauf der inneren Kammerwände folgen.

7. Hydraulisch dämpfendes Gummibuchsenlager nach Anspruch 5, **dadurch gekennzeichnet, dass** die inneren und äußeren Kammerwände, im Bereich eines parallel zur Lagerachse und durch die Mitte der Umfangserstreckung einer Kammer (4, 4') geführten Schnitts, zueinander einen gleichbleibenden Abstand a aufweisen.

8. Hydraulisch dämpfendes Gummibuchsenlager nach Anspruch 1 oder 7, **dadurch gekennzeichnet, dass** sich der Abstand a zwischen den inneren und äußeren Kammerwänden bezogen auf die Umfangserstreckung der Kammern (4, 4') in den äußeren Bereichen vergrößert, so dass sich die Kammern (4, 4') zu diesen äußeren Bereichen hin erweitern und eine Öffnung (13, 13') 90° zur Dämpfungsrichtung aufweisen, während im Bereich der Mitte ihrer Umfangserstreckung an den inneren und äußeren Kammerwänden Anschläge (15,15') aus Gummi oder Kunststoff ausgebildet sind.

9. Hydraulisch dämpfendes Gummibuchsenlager nach Anspruch 8, **dadurch gekennzeichnet, dass** das metallische Innenteil (1) in den an eine innere Kammerwand angrenzenden Bereichen eine sich über seine gesamte axiale Länge erstreckende Abflachung (16, 16`) aufweist.

10. Hydraulisch dämpfendes Gummibuchsenlager nach Anspruch 1 oder 2, **dadurch gekennzeichnet, dass** der Radialweg des elastomeren Lagerkörpers (3) durch zwischen Innenteil (1) und dem elastomeren Lagerkörper (3) und/oder dem elastomeren Lagerkörper (3) und dem Innenkäfig (2) angeordnete Einlegeteile begrenzt wird.

## Claims

1. Hydraulically damping rubber bush bearing which is formed for vertical mounting, consisting of a substantially cylindrical metallic inner part (1), a metallic sleeve (inner cage) (2) disposed concentrically with the latter, an elastomer bearing body (3) disposed between the inner part (1) and the inner cage (2) and connected to these by vulcanisation, in which body at least two chambers (4, 4') for receiving a fluid damping agent are formed, which chambers are distributed over the circumference and connected together by a channel (12), **characterised in that** the radially inner wall of each chamber (4, 4') (inner chamber wall) passes from a portion (7, 7') following the bearing axis substantially in parallel in an area at least of one of the axial ends of the chamber (4, 4') into a portion (8, 8', 9, 9') having a shape inclined with respect to the bearing axis (14), while forming an undercut (5, 5', 6, 6') in the direction of the bearing axis (14), and that the inner cage (2) and the elastomer bearing body (3), corresponding with each axial end, provided with an undercut (5, 5', 6, 6') of this kind, of a chamber (4, 4'), are axially shortened in a circumferential portion corresponding substantially to the extent of the respective chamber (4, 4') with respect to the rest of their circumferential portions.

2. Hydraulically damping rubber bush bearing according to Claim 1, which is surrounded by an outer sleeve (11), **characterised in that** the outer sleeve (11) has a circumferential shape which is adapted to the elastomer bearing body (3) and the inner cage (2) with axially shortened portions in the area of the undercuts (5, 5', 6, 6') of the chambers (4, 4').

3. Hydraulically damping rubber bush bearing according to Claim 1 or 2, **characterised in that** this has two chambers (4, 4') with an undercut (5, 5') in the area of one of their axial ends in each case, wherein the undercuts (5, 5') of the two chambers (4, 4') are disposed diametrically relative to one another related to the axial extent of the bearing.

4. Hydraulically damping rubber bush bearing according to Claim 1 or 2, **characterised in that** this has two chambers (4, 4') with a respective undercut (5, 5', 6, 6') in the area of both axial chamber ends.

5. Hydraulically damping rubber bush bearing according to Claim 3 or 4, **characterised in that** the two chambers (4, 4') are disposed at an angle of 180° relative to one another related to the circumference of the bearing.

6. Hydraulically damping rubber bush bearing according to Claim 1 or 4, **characterised in that** the radially outer walls (10, 10') of the chambers (outer chamber walls) likewise in each case have a shape inclined with respect to the bearing axis (14) in the area of a undercut (5, 5', 6, 6') formed by the corresponding shape of the associated inner chamber wall, and in terms of their shape substantially follow the shape of the inner chamber walls in the area of a section taken through the centre of the circumferential extent of a chamber (4, 4').

7. Hydraulically damping rubber bush bearing according to Claim 5, **characterised in that** the inner and outer chamber walls are at a constant distance a from one another in the area of a section taken parallel to the bearing axis and through the centre of the circumferential extent of a chamber (4, 4').

8. Hydraulically damping rubber bush bearing according to Claim 1 or 7, **characterised in that** the distance a between the inner and outer chamber walls increases in the outer areas related to the circumferential extent of the chambers (4, 4'), so that the chambers (4, 4') widen towards these outer areas and have an opening (13, 13') of 90° relative to the damping direction, while stops (15, 15') of rubber or plastics material are formed at the inner and outer chamber walls in the area of the centre of their longitudinal extent.

9. Hydraulically damping rubber bush bearing according to Claim 8, **characterised in that** the metallic inner part (1) has a flattening (16, 16') extending over its entire axial length in the areas adjoining an inner chamber wall.

10. Hydraulically damping rubber bush bearing according to Claim 1 or 2, **characterised in that** the radial shape of the elastomer body (3) is defined by inserts which are disposed between the inner part (1) and the elastomer bearing body (3) and/or the elastomer bearing body (3) and the inner cage (2).

## Revendications

1. Palier à douille caoutchouté, à amortissement hydraulique, aménagé pour un montage vertical, composé d'une partie métallique intérieure (1) essentiellement cylindrique, d'une douille (cage intérieure) métallique (2) disposée concentriquement à celle-ci, et d'un corps de palier élastomère (3) disposé entre la partie intérieure (1) et la cage intérieure (2) et relié à ceux-ci par vulcanisation, dans lequel, réparties sur la circonférence, au moins deux chambres (4, 4') sont prévues, qui sont reliées l'une à l'autre par un canal (12) et destinées à recevoir un moyen d'amortissement fluide,
**caractérisé en ce que**
la paroi radialement intérieure de chaque chambre (4, 4') (paroi intérieure de chambre) se transforme, au niveau de l'une au moins des extrémités axiales de la chambre (4, 4'), d'une section (7, 7') s'étendant essentiellement parallèlement à l'axe du palier, en une section (8, 8', 9, 9') présentant une orientation inclinée par rapport à l'axe (14) du palier, en formant ainsi une contre-dépouille (5, 5', 6, 6') dirigée en direction de l'axe (14) du palier,
et **en ce que**
la cage intérieure (2) ainsi que le corps de palier élastomère (3) sont axialement raccourcis, par rapport à leur sections circonférentielles restantes, en concordance avec chacune des extrémités axiales d'une chambre (4, 4'), qui est pourvue d'une telle contre-dépouille (5, 5', 6, 6'), et sur une section circonférentielle qui concorde pour l'essentiel avec l'étendue de la chambre correspondante (4, 4').

2. Palier à douille caoutchouté à amortissement hydraulique selon la revendication 1,
qui est entouré par une douille extérieure (11),
**caractérisé en ce que**
la douille extérieure (11) présente un dessin circonférentiel adapté à celui du corps de palier élastomère (3) et de la cage intérieure (2), ayant des sections axialement raccourcies au niveau des contre-dépouilles (5, 5', 6, 6') des chambres (4, 4').

3. Palier à douille caoutchouté à amortissement hydraulique selon la revendication 1 ou 2,
**caractérisé en ce que** celui-ci comprend deux chambres (4, 4') pourvues de contre-dépouilles (5, 5') respectivement aménagées au niveau d'une de leurs extrémités axiales, les contre-dépouilles (5, 5') des deux chambres (4, 4') étant disposées de façon diamétralement opposée l'une à l'autre, par rapport à une étendue axiale du palier.

4. Palier à douille caoutchouté à amortissement hydraulique selon la revendication 1 ou 2,
**caractérisé en ce que** celui-ci comporte deux chambres (4, 4') ayant chacune une contre-dépouille (5, 5', 6, 6') au niveau des deux extrémités axiales de chaque chambre.

5. Palier à douille caoutchouté à amortissement hydraulique selon la revendication 3 ou 4,
**caractérisé en ce que** les deux chambres (4, 4') sont disposées à un angle de 180° l'une par rapport à l'autre, vu par rapport à la circonférence du palier.

6. Palier à douille caoutchouté à amortissement hydraulique selon la revendication 1 ou 4,
**caractérisé en ce que** les parois radialement extérieures (10, 10') des chambres (parois extérieures des chambres) présentent également, au niveau d'une contre-dépouille (5, 5', 6, 6') formée par le dessin correspondant de la paroi intérieure de la chambre, qui lui est associée, une orientation inclinée par rapport à l'axe (14) du palier, et que leur dessin suit, au niveau d'une coupe faite parallèlement à l'axe (14) du palier, en passant par le milieu de l'étendue circonférentielle d'une chambre (4, 4'), pour l'essentiel le dessin des parois intérieures de la chambre.

7. Palier à douille caoutchouté à amortissement hydraulique selon la revendication 5,
**caractérisé en ce que**
les parois intérieure et extérieure de la chambre présentent, au niveau d'une coupe faite parallèlement à l'axe du palier, en passant par le milieu de l'étendue circonférentielle d'une chambre (4, 4), un écartement uniforme (a) l'une par rapport à l'autre.

8. Palier à douille caoutchouté à amortissement hydraulique selon la revendication 1 ou 7,
**caractérisé en ce que**
l'écartement (a) entre les parois intérieure et extérieure de la chambre, vu par rapport à l'étendue circonférentielle des chambres (4, 4'), augmente dans les zones extérieures, de sorte que les chambres (4, 4') s'élargissent en direction de ces zones extérieures et forment une ouverture (13, 13') orientée à 90° par rapport au sens d'amortissement, alors qu'au niveau du milieu de leur étendue circonférentielle, des butées (15, 15') en caoutchouc ou en matière plastique sont formées sur les parois intérieure et extérieure de la chambre.

9. Palier à douille caoutchouté à amortissement hydraulique selon la revendication 8,
**caractérisé en ce que**
la partie métallique intérieure (1) présente, au niveau des zones adjacentes à une paroi intérieure de la chambre, un méplat (16, 16') s'étendant sur toute sa longueur axiale.

10. Palier à douille caoutchouté à amortissement hydraulique selon la revendication 1 ou 2,
**caractérisé en ce que**
la course radiale du corps de palier élastomère (3) est limitée par des inserts insérés entre la partie intérieure (1) et le corps de palier élastomère (3) et/ou entre le corps de palier élastomère (3) et la cage intérieure (2).
